# EUROPEAN PATENT APPLICATION

(11) **EP 3 998 739 A1**
(43) Date of publication of application: **18.05.2022**
(21) Application number: 20836053.7
(22) Date of filing: 09.07.2020
(51) Int. Cl.: H04L 9/06, G06F 16/00

(54) **METHOD FOR CERTIFIED DELIVERIES AND NOTIFICATIONS BASED ON BLOCKCHAIN TECHNOLOGY**

(30) Priority: 10.07.2019 ES 201930642
(71) Applicant: Universitat de les Illes Balears, 07122 Palma (Islas Baleares) (ES)
(72) Inventor: PAYERAS CAPELLÀ, Maria, Magdalena, 07122 Palma (Islas Baleares) (ES); MUT PUIGSERVER, Macià, 07122 Palma (Islas Baleares) (ES); HUGUET ROTGER, Llorenç, 07122 Palma (Islas Baleares) (ES); CABOT NADAL, Miquel, Àngel, 07122 Palma (Islas Baleares) (ES)
(74) Representative: Herrero & Asociados, S.L.
(86) International application number: PCT/ES2020/070442
(87) International publication number: WO 2021/005257

(57) **Abstract**

The method is a decentralized application based on a blockchain for monitoring notifications and deliveries, certified and confidential, of messages or data files to at least one recipient, generating proof of non-repudiation of sending and receiving, and the result of the notification: participants, timestamp of the notification moment and final status. The method controls the flow of data exchange and evidence through smart contract functions invoked by the sender and recipients, without the intervention of trusted third parties to manage the process or resolve conflicts between parties. The content of the notification is not saved in the blockchain, but can be confirmed, from the data stored by the smart contract, that the data provided by any of the participants corresponds to the exchange data, including the message. Alternatively, the delivery of public and accessible messages through the smart contract is also allowed.

## Description

### OBJECT OF THE INVENTION

The present invention is applied in the telecommunications and information technology industry. More particularly, the present invention relates to a method for notifications and deliveries of digital data, certified (confidential or public), which uses Blockchain technology.

### BACKGROUND OF THE INVENTION

The certified or registered delivery of data carried out electronically requires the use of protocols that provide proof or evidence of the execution of the delivery. These services, also known as certified notification services, or even certified email when the means used for sending is email, allow a sender to prove that they have sent digital data (hereinafter, the message), being able to treat notification messages or other data, such as a file, to a receiving or set of recipients. Therefore, these services provide evidence that a receiving has access to the information from a specific date / time.

In general, trust services must be secure, protect the privacy of users and, at the same time, must take into account existing regulations. The data sent and received using the certified delivery service must present the properties of data integrity, the identification of the sender of the data and also of its receiver. A qualified certified delivery service must offer the following capabilities: data integrity, origin authentication, and delivery time authentication. Confidentiality is not considered a basic functionality, but is generally provided as part of a more complete solution.

The basic characteristics of a certified delivery system are:
1) Effectiveness. If the parts behave correctly, they will receive the expected elements.
2) Equity. After completing a run, either party has received the expected item or neither party has received any useful information about the expected item.
3) Non-repudiation. If a party A delivers an item to a party B, A cannot deny the origin of the item and B cannot deny the receipt of the item.
4) Independence from trusted third parties. It is considered desirable not to require a trusted third party to guarantee the final state of the exchange that the delivery represents.
5) Transferability of the evidence. The evidence generated by the system can be transferred to external entities or be consulted by these entities to prove the result of the exchange.
6) Confidentiality. Only the sender and recipient of the data know the content of the certified message.
7) Efficiency. An efficient protocol uses the minimum number of steps that allow effective exchange or the minimum cost.

Some examples of using certified delivery services are:
- certified email, an enhanced form of email transmitted by electronic means that provides evidence related to the handling of a message, including proof of dispatch and delivery;
- delivery of official electronic notifications and support of official presentations in electronic administration services;
- access and exchange of confidential data and notarial certifications.

In the certified delivery service, the elements to be exchanged are the data that make up the message to be delivered together with the proof of non-repudiation of origin and reception. The data that can be sent in an electronic delivery service from a sender to a receiver can be of any type (including digital files) and the transmission media can be of any type. In this way, certified notifications and certified email are included in certified delivery services.

An extension of certified sender delivery systems are systems that allow simultaneous delivery to multiple recipients. A multi-recipient certified delivery protocol enables more efficient and functional deliveries than a protocol that only allows delivery to one recipient. In such a scenario, different parties are involved in an exchange of messages.

As indicated above, certified delivery services, along with other electronic services, such as electronic signing of contracts or electronic purchasing (payment in exchange for a receipt or digital product), require a fair exchange of items between two or more users. In order to carry out these exchanges, there are proposed protocols that follow the generic pattern called equitable exchange of values. A fair exchange always provides equal treatment for all users and at the end of each execution, either party has the item they want to obtain from the other party, or the exchange has not been successful for anyone (neither party has received the expected item).

To solve the problem of fair exchanges, traditional solutions include trusted third parties (TTPs) who manage exchanges to a greater or lesser extent and are responsible for resolving any conflicts that arise as a result of interrupted exchanges or attempted fraud.

In addition to that, these solutions normally use non-repudiation mechanisms to generate evidence that demonstrates the behavior of the protocol actors, so that, in the event of a dispute, an external arbitrator can evaluate them and make an unequivocal decision.

However, in practice, the implementation and acceptance of this type of entities based on TTPs is an obstacle to extending the use of protocols in the network. On the one hand, it is difficult to have TTPs that are really trusted by any user on the network and that have a defined framework of action (for example, electronic documents generated by the TTP have to be accepted to resolve disputes in court, of according to the laws of different countries). In addition, TTPs can also cause problems at a technical level (for example, they can cause bottlenecks from the point of view of communications), lack of efficiency in the protocols and increase the cost of executing the protocol (for example, charging high fees for the provision of services). In addition, they are a very sensitive point in the network, since they play an important role in the security of the electronic protocols and their reliability is an issue requiring attention, since the security of the interchange can be broken if the TTP has vulnerabilities. The role of the TTP can be very different between existing solutions for certified deliveries, being able to play an important role because the TTP participates in each exchange of items, or carry out a more relaxed role in which the TTP is only active when there arises a dispute between the parties (optimistic protocols).

Due to the incompatibility between some of the properties of the certified delivery services and the difficulty of simultaneously achieving a certain set of them in the same procedure, it is possible to find protocols that solve the exchange efficiently with an optimistic TTP, even if they only achieve weak fairness, while other systems are focused on achieving specific features such as proof transfer, TTP verifiability, avoiding selective rejection based on sender identity, flexibility to allow simultaneous delivery to multiple recipients or reducing the volume of status information that the third party must maintain.

Next, some solutions of the prior state of the art are mentioned, which present systems and / or certified delivery methods where some of the aforementioned properties are guaranteed, but not all at the same time, such as:
- US2009094452A1 discloses an optimistic protocol for the exchange of electronic mail or certified email in which a TTP intervenes only in case of disputes. The message is encrypted with a password shared by the sender and a TTP, but there is also the possibility that the encryption password of the message is encrypted with the public password of the TTP. TTP only intervenes in case of dispute (invalid sender's certificate or recipient's receipt or protocol interruption). Otherwise, the evidence of non-repudiation is generated without its participation. Therefore, this solution requires the participation of a TTP, although its participation is limited to the resolution of disputes. It does not use any smart contracts, nor does it foresee that the messages are public.
- EP0955745A2 describes a method of equitable exchange in communication networks of digital signatures between a first party and a second party, including the use of one or more trusted signatures, such that each party receives a valid digital signature from the other party, or none at all of the parties receives a valid digital signature. This method comprises a plurality of message transfers between the two parties, and uses a trusted third party (TTP) that can act as a confirmer, independently verifying the validity of a confirmable signature originating from either the first party or the second party.

On the other hand, there are some protocol proposals for equitable exchanges, other than certified deliveries, that use blockchain technology. These proposals focus on fair purchase transactions between a product (or a receipt) in exchange for cryptocurrencies (usually bitcoin), but there is no proposal for confidential multi-receiving certified notifications and deliveries based on blockchain.

Here are some prior art proposals that use blockchain technology, for fair exchanges that are not certified notifications or deliveries:
- US2018130050A1 presents a method to manage transactional data in blocks with cryptographic signature in a chain-based system, which involves verifying if the transaction is carried out according to the privileges associated with the wallets of parties trying to carry out the transaction, using blockchain technology. The objective of the system is to manage transactions in cryptographically signed blocks, so it is not properly an information exchange system.
- CN108566395A introduces a method for transmitting files from transmitter to receiver based on the blockchain, which involves performing the blockchain identity identification process by using a digital certificate, and transmitting a digital envelope to the receiver based on the chain, they provide a blockchain-based file transmission system. It uses encryption for the transmission and digital certificates for the identification of the parties. However, the system does not generate evidence of non-repudiation.
- US2019036778A1 presents a method to use blockchain smart contracts to manage dynamic data usage requirements. A smart contract is a computer program that inhabits a system not controlled by any of the parties (or their agents), and that facilitates, secures, enforces and executes agreements registered between two or more parties (for example people or organizations). When a pre-programmed condition is triggered, not subject to any type of human assessment, the smart contract executes the corresponding contractual clause. In the case of managing dynamic data usage requirements, it involves modifying the operational state of the network based on the policies and data thresholds that are exceeded, and storing the modified operational state on the blockchain. The method described in US2019036778A1 uses smart contracts for that purpose, that is a technical objective totally different to the one herein proposed.

The objective technical problem that arises is therefore to provide a method for tracking message delivery (confidential and public) to one or more recipients, controlling the flow of data exchange and notifications through the functions of smart contracts on a blockchain that can be invoked by recipients (or single recipient) and sender.

### DESCRIPTION OF THE INVENTION

The present invention serves to solve the aforementioned problem, presenting a method for certified notifications and delivery of messages, in which non-repudiable evidence is generated both from sending and receiving of the messages and notifications, plus status confirmation of completion or cancellation of delivery / notification, where none trusted third party (TTP) is used, but a blockchain is used. The proposed method constitutes a distributed protocol or application that controls the flow of data exchange and evidence through the functions of a blockchain smart contract that are invoked by the participants / users of the method: sender and recipients. In addition, the method allows the signing of contracts between two or more signing users, where the contract to be signed refers to any contract, in its generic concept, it does not refer to a smart contract.

Users can act as:
- Sending user: User who generates the notification or the data to be delivered through the method, acting as sender.
- Receiving users: Users who will receive the certified delivery, acting as recipients.
- Contract signing users.

Notifications and deliveries of messages are made from a sender to one or more receivers.

The possible data to be exchanged in the method between the sending user and the, at least one, receiving user are:
- Message, the message being understood as both the text belonging to a notification and a file or record of digital data of any kind. Messages can be confidential or public.
- Proof of non-repudiation of issuing, which prevents the sender from denying the broadcast of the specific message.
- Proof of non-repudiation of receipt. One for each recipient of the specific message, which prevents the recipients from denying the receipt of the message.

From the exchanged data, the method provides evidence of the notification result: participating entities, timestamp of the notification instant, and final status.

The exchange of elements is carried out on a blockchain. The method controls the flow of data exchange and tests through the execution of the functions of a smart contract. A main smart contract can be used for different notifications or deliveries and a specific smart contract is generated for each of the notifications / deliveries. The main contract allows the consultation of the notifications completed by each user. The method also provides mechanisms so that the message notification or delivery service between the sender and a subset of the recipients can be terminated, canceling for the rest of the recipients. The method also allows defining the value of certain acceptance and completion periods for each notification / delivery.

An aspect of the invention relates to a method for certified notifications and certified deliveries of digital data (messages) that uses a blockchain network, where a provider provides a certified notification or delivery service through at least one smart contract deployed on the blockchain between a sending user and one or more receiving users. Users interact with the certified notification service or delivery through access devices or sending or receiving user terminals. Users and the provider interact with the blockchain through a communication interface. The method comprises the following steps:
- the provider unfolds a main smart contract;
- the users send information to log in for the service:
- the sending user prepares a notification or delivery of a message, private or public;
- for each prepared notification or delivery, the sending user accesses the main smart contract to create a smart contract specific to the notification or delivery that manages the certified notification or certified delivery of the message to be exchanged and that comprises a set of receivers and at least one first expiration (V1) which defines a given upper limit time threshold to all receivers to accept the notification or delivery;
- for each notification or delivery prepared, each receiving user detects the notification or delivery and access the specific smart contract;
- each receiving user prepares an acceptance response that represents an acknowledgment of the notification or delivery detected;
- each receiving user shipping the acceptance response before the first expiration (V1) is added by the provider to a subset of receivers;
   - the sending user access that subset of receivers and, for each receiving user of the subset, calculates a response comprising information to enable each receiving user of the subset to read the message, and sends it to the provider;
- the provider checks the correctness of the answers sent by the sending user and establishes a final state of the exchange: completion state, if the verification determines that answers sent are correct, and cancellation state, otherwise;
   - in case of completion status, each receiving user who has accepted the notification or delivery gets the response calculated by the sending user so that it can read the message;
   - in case of cancellation state, each receiving user who has accepted the notification or delivery obtains evidence of cancellation of the notification or delivery.

In a possible embodiment, the message notification or delivery service is performed through the following steps:
1) Deployment of the main smart contract.
2) Registration in the system of the public addresses used in the blockchain by users.

For each delivery or notification, in the case of confidential messages:
3) Generation of notification and encryption keys, by the sender, of the data to be delivered.
4) Access to the main smart contract by the sending user. Automatic deployment of the specific smart contract of the delivery / notification that manages the exchange and execution, on the smart contract deployed in this step, and by the sender, of the function of sending the encrypted message using an encryption element or parameter. This function has as parameters the encrypted message, the receiver or set of receivers and the values of some expirations (or upper time limits) that determine the acceptance and completion periods: a first expiration specifies the valid period for recipients to accept the delivery / notification before the sender completes it, and a second expiration determines the period for the sender to complete the delivery and the moment from which the receivers can read the message or obtain evidence of cancellation of the delivery / notification not finalized by sender. In the case that the notifications / deliveries are for a single receiving user, a simplification of the method can be used where one of the expirations is eliminated.
5) Access of the user or receiving users to the specific smart contract deployed in stage 4.
6) For each of the recipients of the delivery / notification, creation of the necessary elements for the sender to generate the response that allows the specific smart contract to verify the possibility of access to the data by the recipient, which may be passwords delivery / notification, challenge and encryption of its delivery / notification private password.
7) For each of the recipients who wants to go ahead with the delivery / notification, acceptance (in the established period) of the delivery / notification and sending of the elements generated in stage 6, including a possible challenge and the encrypted password.
8) Determination, by the specific smart contract, of the set of receivers with which the exchange is going to be finalized.
9) For each recipient of the previous set, obtaining, by the sender, the recipient's private delivery / notification password.
10) For each receiver of the previous set, preparation and sending, by the sender, in the established period, of the response that allows the specific smart contract to verify the possibility of access to the data by the receiver, being able to use the password delivery / notification of the recipient, challenge and encryption element of the message.
11) Access of the sending user to the smart contract deployed in stage 4 by entering the necessary data for the completion of the exchange, including data for the smart contract to validate the response to the challenge through, for example, a zero knowledge test.
12) Verification by the specific smart contract of the data provided by the sender through, for example, a zero knowledge test, so as to ensure that the receiver has access to the encryption element and therefore to the message. The specific smart contract cannot access the message, so the message can remain a confidential message. Determination of the final state of the exchange: the receivers who have accepted the exchange go to the finished state, while the rest go to the rejected state. The final state of the exchange can be: of completion, having generated proof of non-repudiation of origin and reception; or cancellation, a state in which there are no valid proofs of non-repudiation.
13) In case of completion of the exchange, each recipient of the set of recipients that have accepted the delivery / notification decrypts the message from the data provided by the specific smart contract.
14) In case of correct non-completion by the sender, recipients can obtain proof of cancellation of delivery / notification that invalidates any proof of non-repudiation of receipt. This test is available after the second expiration.

The non-repudiation tests generated by the method guarantee the authenticity of the parties, by verifying the identity of the users who perform the functions of the smart contract. Therefore, the execution of the functions requires knowledge of the secret keys of the blockchain addresses. A proof of non-repudiation of origin can be generated at stage 7 or stage 11:
- In step 7, the proof of non-repudiation is generated when the receiving user (s) accept the receipt of the notification / delivery; then the smart contract authenticates the user who accesses the acceptance function, guaranteeing non-repudiation at reception. These proofs of non-repudiation of receipt are invalidated in step 14 if the sender does not complete the exchange within the established period (second expiration).
- In step 11, the proof of non-repudiation is generated when the sending user executes the completion function and provides the data with which the receiver obtains the element for the decryption of the message; then the smart contract authenticates the user who accesses the completion function and the data provided, guaranteeing non-repudiation at origin.

The method can also generate proofs of the result of the notification that are transferred and consulted for the dissemination of the result of the exchange. Non-repudiation tests and notification result tests ensure fair data exchange.

The method satisfies the data integrity property, since the smart contract verifies that the message or data set that the receiver (s) can decrypt corresponds to the encrypted message in stage 3 (and sent in stage 4). This method prevents the sender from changing the message based on the acceptances received in step 7.

Another possible embodiment is the case of a notification or message delivery public, where there is no encryption and the sender can post the message on the blockchain. The method for public messages presents a solution for fair multi-recipient delivery with one sender and multiple recipients. The sender of the delivery and the set of recipients exchange the message and non-repudiation evidence following the steps of an exchange protocol as follows:
1) A sender sends a message to the set of recipients creating a contract through the invocation of the factory constructor function deployed by the provider, including as parameters the "hash" of the message to be delivered, the addresses of the recipients and some expiration deadlines V1 and V2. The "hash" or cryptographic summary/digest of the message is a unique series of data that is created when the collection of information to be protected is executed through a hash function or summary function. The V1 expiration determines the time limit for accepting a delivery for the recipients before the sender completes it, and the V2 expiration determines the period for the sender to complete the delivery and the receiver to obtain the message and proof of non-repudiation of origin or evidence of cancellation of the notification. Optionally, a deposit or payment for the service can be included at this stage.
2) Each recipient of the set of recipients can decide individually whether to accept the delivery or not. In case of acceptance, it must be executed the corresponding function of the smart contract before V1, expressing its will. If a receiver does not accept before V1, a rejection is assumed.
3) After the expiration of the first V1 period, or after all receivers in the set have accepted the receipt (whatever occurs first), the sender can publish the message by sending it to the smart contract and finalize the delivery to the subset of recipients who have accepted the message notification. The smart contract checks whether the hash of the received message is equal to the hash stored in the blockchain, and then marks all recipients that have accepted using the completed status as proof of non-repudiation, while all recipients that have not accepted pass to the rejected state. As a consequence, the smart contract publishes the proof of non-repudiation for the recipients who accepted the notification.
4) Finally, after the second waiting period V2, the recipients who have accepted the delivery can access the message through the communication interface (e.g., WEB3 or similar). If the sender has not successfully completed the broadcast, the receivers have access to the corresponding evidence of cancellation.

On the other hand, this method of notifications and message delivery can also be used for the operation of signing smart contracts by two or more signatories. In a possible execution of the signature operation, an equitable exchange of signatures is carried out on the contract. Users are no longer divided into sender and receiver and all users are signatories of the contract. One of the users signing the contract acts as a proponent of the contract to be signed. There are two fundamental differences between the use of method for notification or delivery and its use for signing contracts. The first difference is that the users (signers) always know the content of the message (in this case, the text of the contract to be signed) before it is accepted. The second difference is that a contract signing exchange is not considered complete until all the plurality of signatories accept the contract.

The advantages of the present invention compared to the state of the prior art are fundamentally:
- The invention provides a decentralized or distributed application based on blockchain technology that eliminates the need for trusted third party involvement (TTP) while satisfying the requirements of the regulations created by the European Union for certified deliveries (eDeliveries, "Registered Electronic Deliveries").The distributed application and the smart contract of blockchain fully manage the flow of data and evidence exchange, so no external TTP intervention is required to process the process or to resolve conflicts between the parties.
- The invention guarantees the confidentiality of notifications and delivery of messages, the receiving user being the only one who can know the content of the message. In confidential notifications, the content of the notification is not kept clear on the blockchain. However, it can be confirmed, from the data stored by the smart contract of the blockchain, that the data provided by any of the users corresponds to the data of the exchange, including the content of the notification. Optionally, the parties can agree to make the notification public, registering the content of the notification on the blockchain. In the case of public notifications, the content of the message can be consulted as one more piece of information through query functions to the smart contract.

### BRIEF DESCRIPTION OF THE FIGURES

Next, a series of drawings will be described very briefly that help to better understand the invention and that expressly relate to an embodiment of said invention that is presented as a non-limiting example thereof.
FIGURE 1.- It shows a general diagram of a method for notifications and delivery of certified messages based on blockchain and the entities participating in the method, according to a preferred embodiment of the invention.
FIGURE 2.- It shows the functions and procedures that are carried out before a certain expiration date and time in the method, according to a possible embodiment of the invention.
FIGURE 3.- It shows the functions and procedures that are performed after a specified expiration date and time in the method, according to a possible embodiment of the invention.

### PREFERRED EMBODIMENT OF THE INVENTION

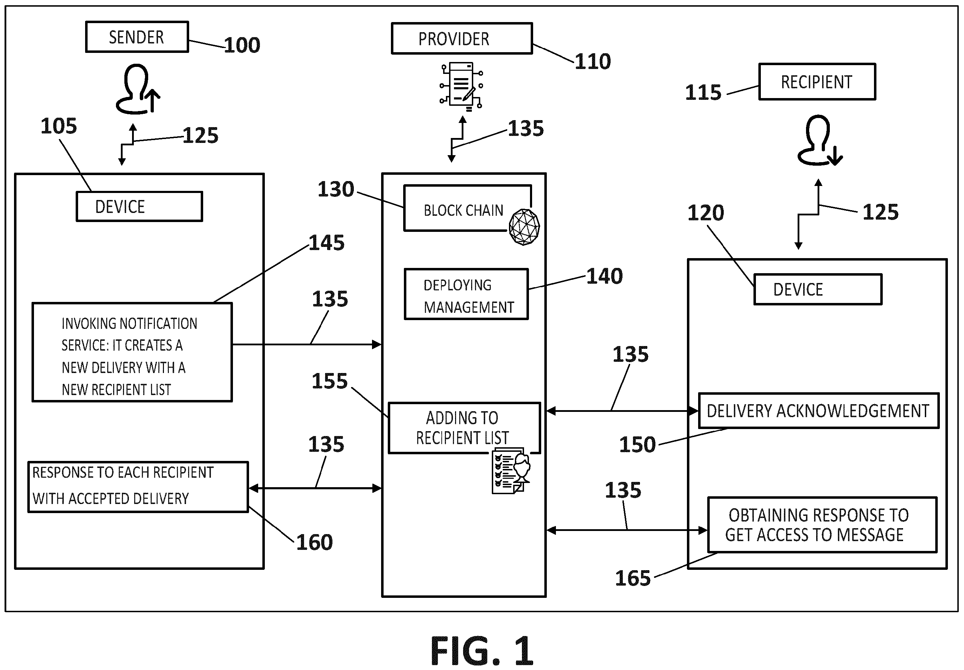

In Figures 1, 2, and 3 a single receiving user has been represented but the elements and processes that also apply in the case of multiple receiving users that any sending of a notification using the method described herein are illustrated.

In a preferred embodiment of the invention it is proposed a method or certified message delivery tracking protocol based on a decentralized application and smart contracts of a blockchain. The message delivery can be to one or more receiving users or recipients. The protocol generates proofs of non-repudiation of both sending and receiving as well as information related to the process of completing the follow-up. It can be notification messages or data deliveries of any nature. The protocol controls the flow of data exchange and evidence through the functions of a smart contract that are invoked by the participants in the system: sender and recipients.

The decentralized application and smart contracts fully manage the certified message delivery process, so it does not require the intervention of any external trusted third party to process it or to resolve conflicts between the parties. The decentralized application provides evidence of the notification result, providing information on the participating entities, the time stamp of the notification moment and the final status of the process.

The possible embodiments of the method contemplate the delivery of two types of messages, confidential or public, with public delivery being a less complex variant of the confidential protocol.

In the case of confidential notifications, the content of the notification is not saved on the blockchain. However, from the data stored in the smart contract, it can be confirmed whether the data provided by any of the participating entities corresponds to the data of the exchange, including the confidential content of the notification.

In the case of public notifications, the content of the message can be consulted as one more piece of information through query functions of the smart contract.

The data exchange protocol (confidential or public) comprises the following steps:
1° In the case of data exchange confidential, sender A encrypts the message to be sent, using an encryption secret and its private password, obtained from a notification password pair created specifically for delivery of data. To do this, sender A creates a smart contract invoking the factory constructor function deployed by the provider, including as parameters: the encrypted message, the sender's public notification password, the addresses of the recipients and some expiration dates (V1, V2). The first expiration (V1) or acceptance expiration specifies the valid period for the receivers to accept the delivery before the sender completes it. The second expiration (V2) or completion expiration determines the period for the sender to complete the delivery and the moment from which the recipients can read the message or obtain evidence of cancellation of the unfinished delivery by the sender. Optionally, a deposit or payment for the delivery service can be included at this stage. In the case of a data exchange public, no encryption, sender A just sends the "hash" of the message to publish it on the blockchain. To publish this cryptographic summary or digest (hash) of the message (public) or the encrypted message (confidential) on the blockchain, sender A uses as parameters the address of the receiver and the expiration that determines the time for the delivery to be completed.
2° Each Bi receiver of the set of receivers B can decide individually whether to accept the delivery or not. In case of acceptance, it must be executed the corresponding function of the smart contract before the first expiration (V1). In the case of data exchange confidential, each recipient who wants to accept the delivery generates its own notification password pair and the elements necessary for sender A to confidentially deliver the password to decrypt the message. The smart contract generated by sender A checks if receiver Bi is capable of decrypting the confidential message; that is, if sender A sends the password that it has agreed to send at the beginning of the sending of this notification. In one of the possible solutions, the receiver Bi creates a variable that is used as a challenge in the next step of the exchange protocol and then sends its public notification password, the challenge, and its encrypted notification private password, using the public password sender notification. The challenge is stored in the same way as the rest of the parameters in the smart contract. If any receiver in receiver set B does not accept delivery before the first due date (V1), a rejection is assumed.
3° After the first expiration date (V1) or after acceptance by all the recipients of the set of receivers B (whatever occurs first), the sender A can terminate the delivery allowing access to the message to recipients who have accepted delivery. In the case of confidential data exchange, the sender A generates the necessary elements for the smart contract to ensure the recipient access to the message. In one possible embodiment, sender A can generate, for each recipient, a response to the challenge in the form of a zero knowledge test, using the secret element used in the encryption of the message, the challenge, and the recipient's notification private password. With this response, the smart contract can verify, using the stored data, that the receiver is able to obtain the secret element in order to decrypt the message. However, the smart contract does not know about this element and therefore the message remains confidential. The smart contract marks all the receivers that have accepted, which constitute a subset B' of the set B of receivers, using the completed status as proof of non-repudiation. On the other hand, the smart contract marks all receivers that have not accepted, i.e., receivers of set B that do not belong to subset B', with the rejected state. As a consequence, the smart contract publishes the non-repudiation test for the receivers that are members of subset B'. The termination process by sender A has to be completed before the second expiration (V2). In case of public exchange of data, sender A sends the message and the smart contract verifies that it is the message used to create the "hash" previously sent (in step 1).
4° Finally, after the waiting period defined by the second expiration date (V2), the recipients of subset B' who have accepted delivery can access the message through a WEB3 interface or similar. In the event that sender A does not successfully complete the delivery before the second expiration (V2), the recipients of subset B' have access to the corresponding evidence of cancellation.

After the exchange protocol, the delivery tracking method proceeds with the following steps:
- The smart contract checks that the receivers of subset B' have the element to decrypt the message, which is not stored in the blockchain if it is confidential. To do this, the smart contract stores a Boolean variable "finished" for each receiver Bi, so that for the receivers that have finished the exchange, the variable Finished (Bi*∈ B ')* = *true,* while for the rest Finished (Bi *∉ B ') = false.* If the data exchange is public, the message is available directly, since it is stored in the block chain, but only the members of B' can prove that they have been notified by A. The smart contract also stores the Boolean variable completed for each receiver, so that for receivers that have completed the Finished exchange (Bi *∈ B* ) = *true,* while Finished (Bi *∉ B* ) *= false.*
- After the second expiration (V2), for the confidential case, the message can be decrypted by all Bi receivers ∈B '. If after the second expiration (V2) sender A has not published the zero knowledge test correctly, recipients BiE B ' can obtain the evidence of cancellation of delivery. In the public case, if after the second expiration (V2) the sender A has not published the message, the recipients Bi can have from the data stored in the blockchain the evidence of cancellation of their notification. If, on the contrary, sender A has left his message on the blockchain before the second expiration (V2), the recipients have access to it and obtain proof of non-repudiation of origin.

The protocol also features a variant for single recipient delivery. Although the protocol (both public and confidential) described above can be used with a single receiver, this variant has higher efficiency.

The exchange protocol data for the case of a single sender and a single receiver is as follows:
- The originator of the message uses the smart contract to publish the "hash" of the message or the encrypted message on the blockchain, depending on whether a public or confidential notification is intended.
- The receiver, if accepting the reception, performs the accept function.
- Finally, the sender publishes the message, in the case of public notifications, or the decryption elements, in the case of confidential deliveries. As a consequence, the smart contract publishes the proof of non-repudiation.
- If all three steps are not executed, the smart contract is not automatically destroyed and after expiration completion (V2), both parties can access a function of the smart contract to request the cancellation of the transferred items.
   ∘ Cancellation of reception, requested by the receiver, if the sender does not publish the message when the receiver has accepted the notification.
   ∘ Cancellation of issuing, requested by the sender, if the receiver has not accepted the notification.
   In both cases, the smart contract verifies the identity of the user (receiver or sender) requesting the cancellation and the expiration period. The smart contract generates a transaction to signal that the notification has been canceled. It can be seen that the main difference in the protocol for a single recipient is thus in the management of expirations.

In a possible embodiment, from the method of exchange described above for the multi-recipient and public case, exchanges can be made for the signing of multi-party public contracts as follows:
1) The proposing signing user creates the smart contract as described above, including as parameters: the message (which now consists of the text of the contract to be signed and not its "hash"), the addresses of the signers and the expiration dates V1 and V2.
2) Each signer can individually decide whether or not to accept / sign the contract by executing the corresponding function of the smart contract before the first V1 period. If any recipient does not accept before the first period V1, the signing of the contract is canceled for all the signatories.
3) After everyone has accepted / signed the contract, the proposing signing user can finish the signing process, dispensing with the verification of the "hash".

After the exchange protocol, the text of the contract and the addresses of the signers are public and are stored on the blockchain. If after the second period, the proposing signatory has not proceeded to the completion / signing of the contract, the other signatories may have evidence of cancellation of the contract.

In another possible embodiment, the method can be used for the signing of confidential multiparty contracts:
1) A proposing signer who proposes to sign the contract encrypts the contract text and creates the smart contract as described above.
2) Each signing user involved in the signature that is not the proposer generates their own notification password pair and a challenge, and proceeds to send the elements so that the proposing signer can respond to the challenge as described above.
3) The proposing signer responds to the challenge and the smart contract validates the response ensuring that all signers have access to the text of the contract.
4) Each signer, who is not the proponent, can decide individually whether or not to accept / sign the contract received. If any of those signers does not accept before the first period (V1), the exchange is canceled for all signers.
5) After the first period (V1), the proposing signing user can finalize the signing of the contract. The termination process by the sender has to be carried out before the second period (V2).

After the exchange protocol, the text of the signed contract is confidential and is not stored on the blockchain, but the smart contract can prove that the signers have been able to decipher the text of the contract before accepting it. In the event that after the second period, the proposing user has not completed the signing of the contract, the signatories can obtain evidence of cancellation of the signing process.

In another possible embodiment, the method can be used to sign contracts between two users, defined from the exchange protocol data for the case of a single sender and a single receiver. The only difference with the public exchange protocol is in the fact that the proposed signing user include the plaintext of the contract in the first step instead of including a "hash" of the message and thus the third step check is removed. In the confidential version, the challenge creation / response phase must be executed before acceptance by the other signer.

Figure 1 shows a general diagram of the data exchange protocol described above with the participating entities and the basic steps involved. A sending user (100) interacts (125) through a sending user device (105) with the distributed application of notifications and deliveries described. The receiving user (115), which may be one or more than one, similarly has a receiving user device (120) with which it interacts (125) for notifications and deliveries. A smart contract provider (110) of the notification and delivery service has a communication interface (135), for example, a web3 interface or similar, with a blockchain (130). The smart contract provider (110) is the party that activates the deployment (140) of a factory for smart contracts and that can invoke the function of adding user (155) to the list of recipients that accept the notification. The creation function (145) of a new notification and the response function (160) to each receiver with accepted delivery are invoked by the sending user (105). The delivery acknowledge function (150) and the get response function to access the message (165) are invoked by the receiving user (115).

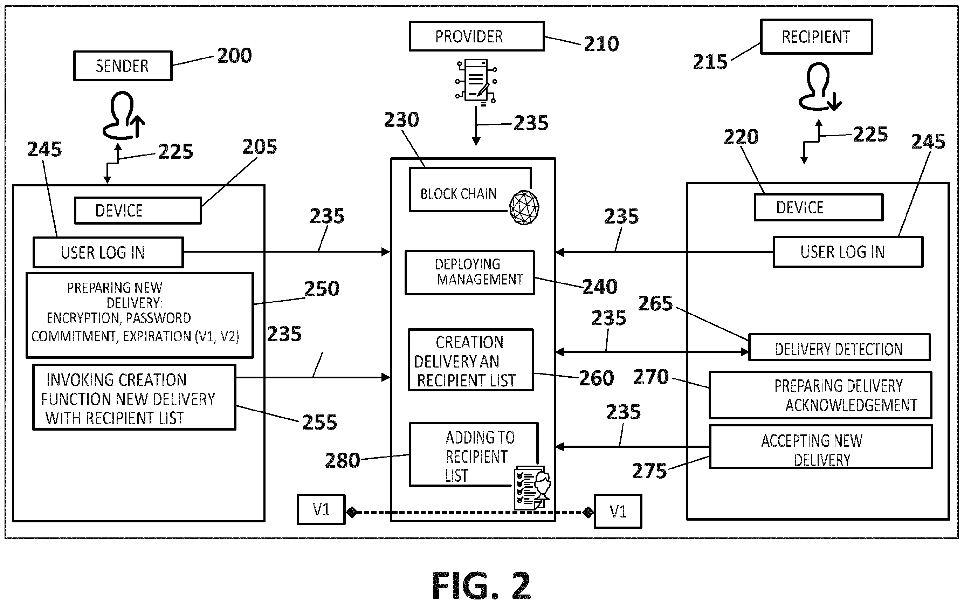

Said Figure 1, like the rest of Figures 2-3, is also applicable to the realization of the method for the exchange of electronic signature of contracts, as described above, when instead of distinguishing between sending and receiving users, it is distinguished a proposing signing user and one or more signing users.

In summary, the schematic in Figure 1 represents the following main steps:
- Deployment (140) of the managing or main smart contract.
- Invocation of the service of notifications and deliveries for the creation (145) of a new notification or delivery with a list of recipients.
- Acknowledgment (150) of the notification or delivery by the recipients.
- Creation of the list of recipients who accept the delivery or notification (155).
- Response (160) for each recipient who has accepted the delivery or notification and who allows access to the data.
- Obtaining the response elements that allow access to the message (165).

Figure 2 shows the functions and procedures that are performed before the first expiration (V1) determined in the data exchange protocol for the recipients to accept the delivery. A sending user (200), through a device of the sending user (205) with an interaction relationship (225) device-user with the application or notification app, proceeds to initiate the action of sending the necessary information to be registered (245) as a user in the system. The same action to log in (245) as a user is performed by the receiving user (215) through his receiving user device (220). The information necessary to log in the sender and receiver as users reaches the factory (240) for the generation of smart contracts provided by the notification service provider (210) on the blockchain (230), which has a communication interface (235) with said blockchain displays a specific smart contract for the exchange (260) of the sender (200) with each receiver user (215) on the list. The sending user (205) is in charge of preparing (250) the new delivery by means of a message encryption procedure, setting delivery deadlines and cryptographic parameters and also invoking the function of creating a new delivery notification (255), eDELIVERY, with the list of recipients. In the part of the receiving user (215) a new delivery detection procedure (265) is carried out and the notification acceptance response (270) is prepared by the receiving user (215), which proceeds to send the acknowledgment and acceptance of the new notification (275), in response to which the provider (210) invokes the function of adding to the list of recipients (280) each receiving user (215) that accepts the notification.

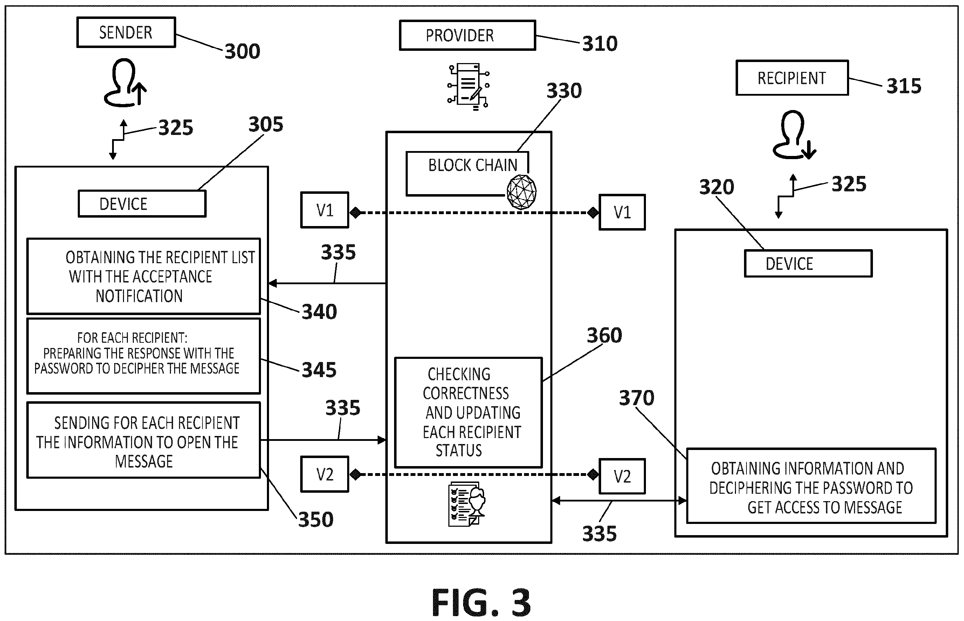

Figure 3 shows the functions and procedures that are performed in the data exchange protocol after the first expiration (V1) and before the second expiration date (V2) that determines the period for the sender to complete the delivery. In the protocol the sending user (300) acts with a device of the sending user (305) and the receiving user (315) with a device of the receiving user (320), both having a device-user interaction relationship (325) with the notification app. The provider (310) of the notification service that uses blockchain smart contracts (330) communicates with the sending and receiving parties through the communication interface (335) that it has with the blockchain. The sending user (300) performs, before the first expiration (V1) and, therefore, before the second expiration (V2), the listing action (340) with all the users who have accepted the notification in progress. For each receiver, the sending user (300) performs a procedure for calculating the response (345) to each receiver so that it can obtain the message to be delivered and, after that, proceeds to send the response (350) calculated for each user with accepted notification. The provider (310) is in charge of invoking the verification function (360) of the correctness of the responses calculated by the sender (300), in accordance with the password issuance commitments and subsequent updating of the data for each user in the blockchain. The function of obtaining (370) by the receiving device (320) the response generated by the sender (300) with which the receiving user (315) can have access to the message is carried out already after the second expiration (V2), i.e., once the sender has completed the delivery.

In a preferred implementation, but not limiting the invention, the provider (110, 210, 310) provides the notification or certified delivery service through a smart contract deployed over a blockchain or blockchain network (130, 230, 330), for example, being able to be an Ethereum network or another network that offers the performance of smart contracts such as those described above. Said provider (110, 210, 310) uses a communication interface (135, 235, 335) with the blockchain, which can be the web3 interface or similar. The "smart contract" or deployed smart contract (140) can create new specific smart contracts for the management of each of the shipments after invocation by the senders.

The sending user (100, 200, 300) interacts (125, 225, 325) with the distributed application of certified notifications and deliveries through an access device of the sending user (105, 205, 305), which may be a computer, smartphone, tablet, etc. This application can be an application for a desktop device or for a portable device with different operating systems (Windows, OSX, Android, iOS,...) and an application programmed in various programming languages, such as Java, C #, Javascript, etc., and with a storage unit, such as a database, etc.

The receiving user or users (115, 215, 315) interact (125, 225, 325) with the aforementioned application through a receiving user access device (120, 220, 320) which can also be a computer, smartphone, tablet, etc. This application can be an application for a desktop device or for a portable device with different operating systems (Windows, OSX, Android, iOS,...) and an application programmed in various programming languages such as Java, C #, Javascript, etc., and with a storage unit such as a database, etc.

All actors interact with the blockchain network using the communication interface (135, 235, 335), for example, web3, implemented in its distributed application part of certified notifications and deliveries.

The running of the application can be broken down into four different stages, which are as follows and are explained in more detail below:
- Initial actions.
- Actions prior to the first expiration (V1).
- Actions taken between the first expiration (V1) and the second expiration (V2).
- Actions after the second expiration (V2).

### 1) Initial Actions:

Initial actions are those that are independent of a specific delivery or notification.

These actions are carried out once and their results are applicable to a set of deliveries or notifications.

These initial actions can be organized in the following phases:
- Deployment (240) of the main smart contract or factory for smart contracts of the certified delivery and notification service, represented in Figure 2.
- This smart contract allows the creation of specific contracts that manage each notification or delivery.
- Determination of the values of the public parameters used in the mathematical and cryptographic functions used in the service.
- Action, by each user, to send the necessary information to log in (245) in the service / system, registering in the system the public addresses used by users in the blockchain network.

### 2) Actions prior to the first expiration (V1), represented in Figure 2:

The actions of this stage are carried out for each delivery or notification. According to the protocol, the actions of this second stage can be organized into the following phases:
- Preparation (250) of a new notification or delivery, with the generation of notification keys, determination of expiration dates and encryption, by the sender, of the message or data to be delivered. The preparation of the delivery (250) is carried out as follows:
   1. If necessary, the message is broken into pieces of shorter and fixed length.
   2. The sending user (100, 200, 300) generates a notification private password and calculates the public password. In a preferred implementation, but not limiting the invention, this password pair will be generated using the EIGamal cryptosystem.
   3. The sender (100, 200, 300) randomly generates the element to use for the EIGamal encryption. This item will be kept secret. In the preferred implementation, the element can be used directly in an EIGamal encryption or a string of pseudo-random encryption elements can be generated from its hash.
   4. Encryption of the message using the sender notification private password and the secret element generated in the previous step.
- Invocation of the creation function (255) of the new smart contract that manages the delivery to the recipient or recipient list (115, 215, 315). Access to the main smart contract of the system by the sending user (100, 200, 300). Automatic deployment of the smart contract that manages the exchange (260) and execution, on the smart contract deployed in this step, and by the sender (100, 200, 300), of the function of sending the encrypted message using an element or parameter encryption. This function has as parameters: the encrypted message, the receiver or set of receivers, the public notification password of the sender and the values of the expirations (V1, V2) that determine the acceptance and completion periods.
- Detection procedure (265) of new delivery / notification and access of the user or receiving users (115, 215, 315) to the smart contract deployed in the previous step.
- For each of the recipients (115, 215, 315) of the delivery / notification, preparation of the acceptance response (270) that represents the recognition of the new delivery. In a preferred implementation, which does not limit the invention, and which uses a zero knowledge test, the notification keys are created, a challenge and the notification private password is encrypted, as follows:
   1. Generation of the receiver notification password pair, using, for example, EIGamal.
   2. Generation of the challenge that is used in the zero knowledge test.
   3. Encryption of the recipient's notification private password with the sender's notification public password.
- For each of the recipients (115, 215, 315) that wants to proceed with the notification, acceptance (275) of the new delivery in the period established by the first expiration date (V1), and sending the challenge and the encrypted password generated in the previous phase.
- Determination, by the smart contract, of the set of recipients with which the exchange is going to be finalized, by means of an addition function (280) of a receiving user to the list of recipients that accept the notification. The smart contract records the status of the recipients who, before expiration, have accepted the notification. For each recipient in the pool, the smart contract records the challenge value, the notification public password, and the encrypted password.

### 3) Actions taken between the first expiration (V1) and the second expiration (V2):

After the first expiration (V1), for each recipient of the set that has accepted the delivery or notification, there will follow the phases illustrated in Figure 3:
- Obtaining, by the sender (100, 200, 300), the list of recipients (340) that have accepted the notification in progress.
- For each recipient of the previous set, obtaining the recipient's notification private password, decrypting the element registered in the smart contract.
- Procedure for calculating the response to each receiver so that it can obtain the message. In a preferred implementation, which does not limit the invention, for each receiver of the previous set, preparation (345), by the sender (100, 200, 300), of the response to the challenge, consisting of a zero knowledge test. The sender (100, 200, 300) prepares and sends, in the established period, the response to the challenge using the notification password of the receiver, the challenge and the secret encryption element of the message, generated in the step of preparing the new notification / delivery (250).
- Sending the responses (350) with the information so that each receiver can decrypt the message, to each user with notification / delivery accepted.
- Access of the sending user (100, 200, 300) to the specific smart contract deployed in the exchange step (260), entering the necessary data for the completion of the exchange, including data for the smart contract to validate the response to the challenge through a test of zero knowledge. In a preferred implementation, but not limiting the invention, an EIGamal-based proof of zero knowledge can be used by using modular sums and exponentiations.
- Verification function (360) of the correctness of the sender's responses in accordance with the password issuance commitments and subsequent updating of the data for each user of the blockchain. For this, in the preferred implementation, a verification is carried out by the smart contract of the data provided by the sender through a zero knowledge test, so that it allows it to ensure that the receiver has access to the encryption element and therefore to the message. The smart contract cannot access the message so it remains confidential. Determination of the final state of the exchange: the receivers that have accepted the exchange go to the finished state while the rest go to the rejected state. If the verification of the data provided by the sender is negative, the smart contract updates the sending state to cancelled.

### 4) Actions after the second expiration (V2).

After the second expiration (V2), it is only necessary to access the recipients to the message, represented in Figure 3.
- Execution of the obtaining function (370), by each receiver, of the sender's response in order to be able to access the message. In the event of completion of the exchange, each recipient of the set of recipients that have accepted the notification decrypts the message from the data provided by the smart contract. If the termination was not successful by the sender (100, 200, 300), the receivers get an evidence of cancellation of the sending.

## Claims

1. A method for certified notifications and certified deliveries of messages, where a provider (110, 210, 310) provides a certified notification or delivery service through at least one smart contract deployed over a blockchain network (130, 230, 330) between an sending user (100, 200, 300) and at least one receiving user (115, 215, 315) interacting (125, 225, 325) with the certified delivery or notification service through a sending user access device (105, 205, 305) and a receiving user access device (120, 220, 320) respectively, and where the sending user (100, 200, 300), the at least one receiving user (115, 215, 315), and the provider (110, 210, 310) interact with the blockchain network (130, 230, 330) using a communication interface (135, 235, 335);
the method **characterized in that** it comprises:
- deploying (140), by the provider (110, 210, 310) a main smart contract;
- sending information by the sending user (100, 200, 300) and for each receiving user (115, 215, 315) to log in (245) as a user in the service:
- preparing (250), for the sending user (100, 200, 300), a notification or delivery of a message;
- for each prepared notification or prepared delivery, accessing by the sending user (100, 200, 300) to the main smart contract to create (255) a smart contract specific to the notification or delivery that manages the certified notification or delivery of the message to be exchanged (260) between the sending user (100, 200, 300) and each receiving user (115, 215, 315), where the specific smart contract comprises a set of receivers that contains each receiving user (115, 215, 315) and at least one first expiration (V1) which defines a given upper limit time threshold to all receivers to accept the notification or delivery by each receiving user (115, 215, 315) of the set;
- for each prepared notification or prepared delivery, detecting (265) for each receiving user (115, 215, 315) the notification or delivery and accessing each receiving user (115, 215, 315) to the specific smart contract of the notification or delivery detected;
- for each receiving user (115, 215, 315) of the set, preparing an acceptance response (270) that represents an acknowledgment of the detected notification or delivery;
- adding (280) by the provider (210) to a subset of receivers each receiving user (115, 215, 315) of the set sending the acceptance response (275) prepared before the first expiration (V1);
- accessing (340) to the subset of receivers by the sending user (100, 200, 300) and, for each receiving user (115, 215, 315) of the subset,
- calculating by the sending user (100, 200, 300) a response (345), the response comprising information to enable each receiving user (115, 215, 315) of the subset to read the message, and
- sending the response (350) calculated by the sending user (100, 200, 300) to the provider (310);
- checking (360) by the provider (310) the correctness of the answers sent by the sending user (100, 200, 300), and establishing a final state of the exchange that is selected between completion state, if the check (360) determines that the answers sent are correct, and cancellation state, otherwise;
- in case the final state of the exchange established by the provider (310) is completion state, each receiving user (115, 215, 315) of the subset who has accepted the notification or delivery gets (370) the answer (350) calculated by the sending user (100, 200, 300) to read the message;
- in case the final state of the exchange established by the provider (310) is cancellation state, each receiving user (115, 215, 315) of the subset who has accepted the notification or delivery obtains (370) evidence of cancellation of the notification or delivery.

2. The method according to claim 1, **characterized in that** the blockchain has stored the message what is public, the sending user (100, 200, 300) and the specific smart contract publishes the message or a hash of the message.

3. The method according to claim 1, **characterized in that** preparing (250) the notification or delivery comprises generating, by the sending user (100, 200, 300), information to encrypt the message, that is confidential.

4. The method according to claim 3, **characterized in that** the information to encrypt the message is generated using an EIGamal encryption.

5. The method according to any of claims 3-4, **characterized in that** preparing (250) the notification or delivery comprises generating, for the sending user (100, 200, 300), a sender notification private password and a sender public password, and a secret element, where the sender notification private password and secret element are used to encrypt the message.

6. The method according to any of claims 3-5, **characterized in that** the specific smart contract further comprises the encrypted message.

7. The method according to any of the preceding claims, **characterized in that** preparing (250) the notification or delivery also includes fragmenting the message.

8. The method according to any of the preceding claims, **characterized in that** checking (360) the correctness of the responses sent by the sending user (100, 200, 300) comprises verifying by the provider (310) the specific smart contract accessed by the sending user (100, 200, 300) through a zero knowledge test.

9. The method according to claim 8, **characterized in that** the information in the zero knowledge test is based on an EIGamal encryption.

10. The method according to any of claims 8-9 **characterized in that** preparing an acceptance response (270) for each receiving user (115, 215, 315) comprises generating a receiving notification private password and a receiving public password and a challenge by said receiving user (115, 215, 315) to perform the zero knowledge test, and encrypting the receiving notification private password with a sender notification public password generated by the sending user (100, 200, 300) when preparing (250) the notification or delivery.

11. The method according to claim 10, **characterized in that** it further comprises sending, by each one of the receiving users (115, 215, 315) of the subset that has accepted the notification or handover, the challenge and the receiving encrypted password.

12. The method according to claim 11, **characterized in that,** in case the final state of the exchange established by the provider (310) is completion state, obtaining (370) for each one of the receiving users (115, 215, 315) of the subset the answer comprises receiving some parameters that are the challenge, the receiving encrypted password and a secret element generated by the sending user (100, 200, 300) when preparing (250) the notification or delivery, parameters that are used to read the message.

13. The method according to any of the preceding claims, **characterized in that** the specific smart contract also comprises a second expiration (V2) that defines an upper limit time threshold given to the sending user (100, 200, 300) to end the notification or delivery and from which the subset of receivers that have accepted the notification or delivery to read the message, in case the final state of the exchange established by the provider (310) is completion state, or to obtain the evidence of cancellation of the notification or delivery, in case the final state of the exchange established by the provider (310) is cancellation state.

14. The method according to claim 13, **characterized in that** the obtaining (370) for each one of the receiving users (115, 215, 315) of the subset the response sent by the sender (100, 200, 300) is carried out already after the second expiration (V2).

15. The method according to any of the preceding claims, **characterized in that** sending information to log in (245) comprises registering public addresses used by the sending user (100, 200, 300) and each receiving user (115, 215, 315) on the blockchain network (130, 230, 330).

16. The method according to any of the preceding claims, **characterized in that** the blockchain network (130, 230, 330) is an Ethereum network.

17. The method according to any of the preceding claims, **characterized in that** the communication interface (135, 235, 335) is a web3 interface.

18. The method according to any of the preceding claims, **characterized in that** the sending user access device (105, 205, 305) and the receiving user access device (120, 220, 320) are selected from a computer, a smartphone and a tablet.

19. The method according to any of the preceding claims, **characterized in that** the message is a text of a contract to be signed and the main smart contract is created by a proposing signing user, and wherein:
one or more signing users other than the proposing signing user select, through an acceptance function provided in the main smart contract, between agreeing or not agreeing to sign the contract before the first expiration (V1); and
the proposing signing user completes the signing of the contract, after the first expiration (V1) and before the second expiration (V2), if and only if all signing users other than the proposing signing user agree to sign the contract before the first expiration (V1) and, if not, cancels the signing of the contract for all signing users.
